# EUROPEAN PATENT APPLICATION

(11) **EP 3 575 255 A1**
(43) Date of publication of application: **04.12.2019**
(21) Application number: 19177209.4
(22) Date of filing: 29.05.2019
(51) Int. Cl.: B65H 75/18, B65H 75/22, G06K 19/077

(54) **TRACEABLE CABLE DRUM AND KIT FOR TRACEABLE CABLE DRUM**

(30) Priority: 30.05.2018 IT 201800005845
(71) Applicant: Prysmian S.p.A., 20126 Milan (IT)
(72) Inventor: Fabio, ABBIATI, I-20126 Milano (IT); Davide, FASSONE, I-20126 Milano (IT); Antonino, ARENA, I-20126 Milano (IT)
(74) Representative: Porta & Consulenti Associati S.p.A.

(57) **Abstract**

A traceable cable drum (10) comprises a reel region (11) and at least one flange region (12), a cradle (27) comprising anchor members (32) configured for anchoring said cradle (27) to said flange region (12), a sensor case (21) containing a tracking sensor (20) and configured for being inserted into said cradle (27). The cradle (27) comprises a plurality of engagement elements (37) and said sensor case (21) comprises a plurality of connection elements (38), said plurality of engagement elements (37) or said plurality of connection elements (38) being movable between a retain condition, wherein said plurality of engagement elements (37) and said plurality of connection elements (38) cooperate to retain said sensor case (21) in said cradle (27), and a release condition wherein said plurality of engagement elements (37) and said plurality of connection elements (38) are disengaged and the sensor case (21) is extractable from the cradle (27).

## Description

### Technical field

The present invention relates to a traceable cable drum and to a kit for traceable cable drum.

In particular, the present invention relates to a traceable drum and to a kit for traceable drum for electrical and/or telecommunication cables.

### Background art

Cable drums are often stored in large inventory storage for being used in projects or construction.

Drums with reels of cable of different types and of different lengths are typically stored concurrently in large inventory storage area from which specific cable drums are selected and picked up on the basis of specific projects or construction to be performed.

Once the cable wound on a drum is used, which results in an empty drum, the empty drum is moved to a storage area which can be the initial inventory storage or a different storage area. The empty drum is then returned to the workhouse of the cable manufactory to be reused for winding a new cable.

Typically, technicians need to search for cable of appropriate types and gauges among hundreds or thousands of cable drums stored in the inventory storage. In addition to types and gauges of cable, the technicians also need to search the most appropriate cable length among numerous cable drum of the same cable and of different cable lengths.

In order to operate efficiently and facilitating quickly identifying locations of products in the inventory storage environments, it is known to provide traceable cable drums having tracking means.

Indeed, traceable cable drums allow to use inventory management systems to track information about products that are constantly added or removed from inventory.

This facilitate the selection of cable drums in storage area during cable installation projects and enable to efficiently utilize existing cable drums inventories.

Moreover, important financial benefits are offered by tracking cable drums by reducing the amount of time that empty drums are left on site waiting for being returned to the workhouse of the cable manufactory.

Typically, traceable cable drums comprise a sensor case attached in a recessed portion of the flange of a cable drum by screws, as for example disclosed by document "Nexans and ffly4u connect customers to their cable drums through the Internet of Things" published in a press release of March 9, 2019 from Nexans.

Document WO2016/140789 discloses an example of a suitable method to track cable inventory in an inventory storage environment. During a material intake phase, a small beacon carrying information about the cable reel, the physical location of the reel, the length of the cable and the type of the cable, is attached to a flange of the cable drum. During a material retrieval phase, a target location corresponding to the physical location of the cable reel is received in response to a search query. The cable reel is located using a GPS receiver based on the target location when a mobile device is located farther than a threshold distance from the target location, or using a Bluetooth radio interface, without the GPS receiver, based on the target location when the mobile device is located closer than the threshold distance to the target location.

### Summary of the invention

The Applicant has observed that inventory management systems need effective traceable cable drums for properly working.

In fact, in case of traceability failure, a cable drum becomes invisible to any inventory management system, which results in cable and drum loss.

The Applicant has observed that tracking sensors and/or beacons attached to the drum are subjected to impact and collision during the drum cable transport and handling.

The Applicant noted that such impacts and collisions could detach the tracking sensor and/or beacon from the drum resulting in traceability failure of the cable drum.

The Applicant has further observed that since sensors and/or beacons need to be supplied with a source of energy for transmitting any signal, a failure in the energy supply would result in a traceability failure of the cable drum.

The Applicant has noted that since cable drums are often stored in outdoor storage, the sensor and/or beacon could be exposed to extreme environment condition which could cause damages to, or even failure of, the sensor and/or beacon.

The Applicant has tackled the problem of allowing a traceable cable drum to be effectively traceable during its use.

The Applicant has realised that by providing a sensor case configured to contain a tracking sensor and by allowing authorised technicians to access to the sensor case, the tracking sensor is protected from extreme environment condition and can be properly maintained, which prevents failure of the tracking sensor.

Consistently, the present invention relates to a traceable cable drum comprising:
a reel region and at least one flange region;
a cradle comprising anchor members configured for anchoring said cradle to said flange region;
a sensor case containing a tracking sensor and configured for being inserted into said cradle;
wherein said cradle comprises a plurality of engagement elements and said sensor case comprises a plurality of connection elements, said plurality of engagement elements or said plurality of connection elements being movable between a retain condition, wherein said plurality of engagement elements and said plurality of connection elements cooperate to retain said sensor case in said cradle, and a release condition wherein said plurality of engagement elements and said plurality of connection elements are disengaged and the sensor case is extractable from the cradle.

As the tracking sensor is inserted into the sensor case, the tracking sensor is prevented from being directly exposed to external environment condition, so preventing the tracking sensor from possible damages.

The engagement elements and the connection elements need to be disengaged to access the tracking sensor. This ensures the removal of the tracking sensor from the cradle anchored to the cable drum and thus a proper maintenance and/or replacement of the tracking sensor.

Since the engagement elements and the connection elements need to be moved relative to each other for achieving the release condition, any accidental removal of the tracking sensor is prevented so effectively entrusting technicians with the tracking sensor removal.

Throughout this description and in the following claims, the expressions "cable" is used to indicate a telecommunication cable, an energy cable or a hybrid cable (i.e. a cable for transmitting both energy and telecommunication signals).

Throughout this description and in the following claims, the expressions "elastic deformation" is used to indicate a reversible deformation which, once the deforming force is no longer applied, allows the object to which the force is applied to return to its original shape.

In some embodiments, in said release condition said plurality of engagement elements or said plurality of connection elements are elastically deformed.

The release condition is an unstable condition, namely the release condition is maintained as long as a deforming force on the engagement elements or on the connection elements is applied. When such a deforming force ends, the engagement elements or the connection elements move and reach the retain condition.

This ensures that the release condition is reached only in case a technician properly applies a deforming force on the engagement elements or on the connection elements, so preventing from any accidental or undesirable extraction of the tracking sensor.

In some embodiments, said plurality of engagement elements comprise engagement clips and said plurality of connection elements comprise a plurality of recesses; in said retain condition each engagement clip being inserted into a corresponding recess.

In this embodiment, all the engagement clips need to be simultaneously elastically deformed for allowing the engagement clips to disengage the recesses, which allows the sensor case to be extracted from the cradle. In case the deforming force applied to one of the engagement clip ends before the sensor case is extracted from the cradle, such an engagement clip prevents from the sensor case extraction.

In some embodiments, each recess of said plurality of recesses is provided in a lateral wall of said sensor case and has a closed end (i.e. no opening is formed in the lateral wall by such recess).

In this embodiment, water, dust, mud or any other substance is prevented from entering into the sensor case and damaging of the tracking sensor is prevented.

In some embodiments, said sensor case comprises a plurality of slots for accessing to said plurality of engagement clips and moving the latter from the retain to the release condition; at least some of said slots being covered by relevant detachable flaps.

The detachable flaps hide the slots for accessing to the engagement clips and need to be removed for properly accessing to the latter. This allows only trained personnel to know how to access to the engagement clips and thus how to remove the sensor case from the cradle. Any unauthorised removal of the tracking sensor is therefore prevented.

In some embodiments, said cradle comprises a hollow portion and a flange portion; said hollow portion being configured for receiving said sensor case and said flange portion being configured for abutting on said flange region of the drum.

In some embodiments, said anchor members comprise holes in said flange portion of the cradle configured for being engaged by screw heads.

The holes in the flange portion of the cradle allow to secure the latter to the cable drum while the hollow portion lies into a housing provided in the cable drum. The flange portion can be secured to the cable drum with screws or similar.

In some embodiments, said sensor case comprises lateral walls surrounding a cavity for containing said tracking sensor and a lid for closing said cavity.

In this embodiment, the cavity of the sensor case is sealed so as to prevent water, dust, mud or any other substance from entering the sensor case.

In some embodiments, said lid abuts on said flange portion of the cradle and covers said holes.

By this embodiment, the screws that connect the flange portion of the cradle to the cable drum are covered by the lid of the sensor case and are inaccessible. This prevents the cradle from being detached along with the sensor case from the cable drum. The flange portion of the cradle, and then the screws, is accessible only when the sensor case is extracted from the cradle.

In some embodiments, said anchor members comprise a plurality of indented flaps provided on said hollow portion of the cradle; said indented flaps being outward elastically deformed by said sensor case when inserted into said hollow portion of the cradle.

The indented flaps, alone or in combination with the screws that engage the holes in the flange portion of the cradle, allow to retain the cradle into the housing provided in the cable drum.

In some embodiments, said engagement clips are provided on said hollow portion of the cradle; each engagement clip being aligned with at least one indented flaps and being placed closer to said flange portion of the cradle.

By this embodiment, the cradle is anchored to the cable drum and retains the sensor case.

In some embodiments, said lid comprises a recessed rib configured for being gripped by an extraction tool.

The recessed rib is configured for being held by pliers, or similar extraction tool, so allowing to easily extract the sensor case once the engagement clips are disengaged from the recesses.

In some embodiments, said plurality of slots are provided on said lid and presents an arched shape.

The arched shape of the slots, or similar shapes, requires a predetermined disengaging tool for reaching the engagement clips and elastically deforming the latter. This ensures that only authorised technicians provided with such predetermined disengaging tool can operate on the traceable cable drum for accessing to the tracking sensor.

Another aspect of the present invention relates to a kit for traceable cable drum comprising:
a cradle configured for being anchored to a cable drum and comprising a plurality of engagement clips;
a sensor case containing a tracking sensor, comprising a plurality of recesses and configured for being inserted into said cradle so that said engagement clips engage said recesses;
a disengaging tool configured for contacting said engagement clips and disengaging the latter from the recesses.

The cradle and the sensor case can comprise some or all the features above cited.

Preferably, the sensor case comprises a lid having a plurality of slots; said disengaging tool comprising a plurality of pins configured for being inserted into said slots and for contacting said engagement clips.

### Brief description of the drawings

The present invention will be now described in more detail hereinafter with reference to the accompanying drawings, in which some, but not all embodiments of the invention are shown.

Drawings illustrating the embodiments are not to scale representations.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein.
- Figure 1 shows a schematic perspective view of a traceable cable drum according to the present invention;
- Figure 2 shows a schematic perspective view of a first component of the traceable cable drum of Figure 1;
- Figure 3 shows a schematic perspective view of a second component of the traceable cable drum of Figure 1;
- Figure 4 shows a further schematic perspective view of the second component of Figure 3;
- Figure 5 shows a schematic perspective view of the first component of Figure 2 coupled with the second component of Figure 3;
- Figure 6 shows a schematic section view along plane VI-VI of the first component coupled with the second component of Figure 5;
- Figure 7 shows a schematic perspective view of a disengaging tool; and
- Figure 8 shows a schematic perspective view of the disengaging tool of Figure 7 when in use.

### Detailed description

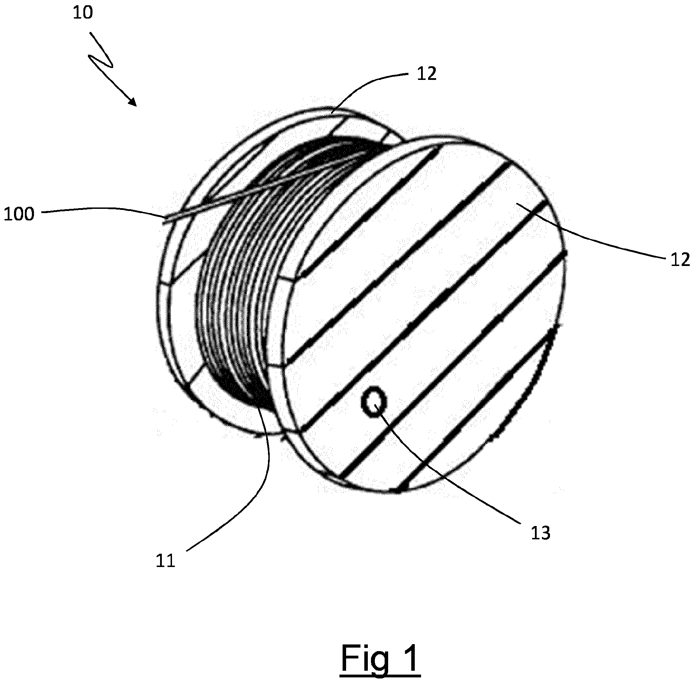

A traceable cable drum according to the present invention is indicated with the reference number 10 in Figure 1.

The traceable cable drum 10 can be made of various materials, such as wood, metal or polymeric material. In the preferred embodiment of the invention, the traceable cable drum 10 is made of wood.

The traceable cable drum 10 comprises a reel region 11 which, preferably, presents a cylindrical shape. The reel region 11 is configured for supporting a wound cable 100 of predetermined length. The cable 100 can be a telecommunication cable, an energy cable or a hybrid cable.

The traceable cable drum 10 comprises two opposed flange regions 12 placed at opposite ends of the reel region 11. The flange region 11 delimits a storage space for the wound cable 100.

One of the flange regions 12 has a housing 13 preferably presenting a cylindrical shape. The housing 13 can be provided on the flange region 12 after the traceable cable drum 10 is assembled or during the manufacturing of the traceable cable drum 10. As an example, in case the traceable cable drum 10 is made of wood, the housing 13 can be obtained by drilling the flange region 12.

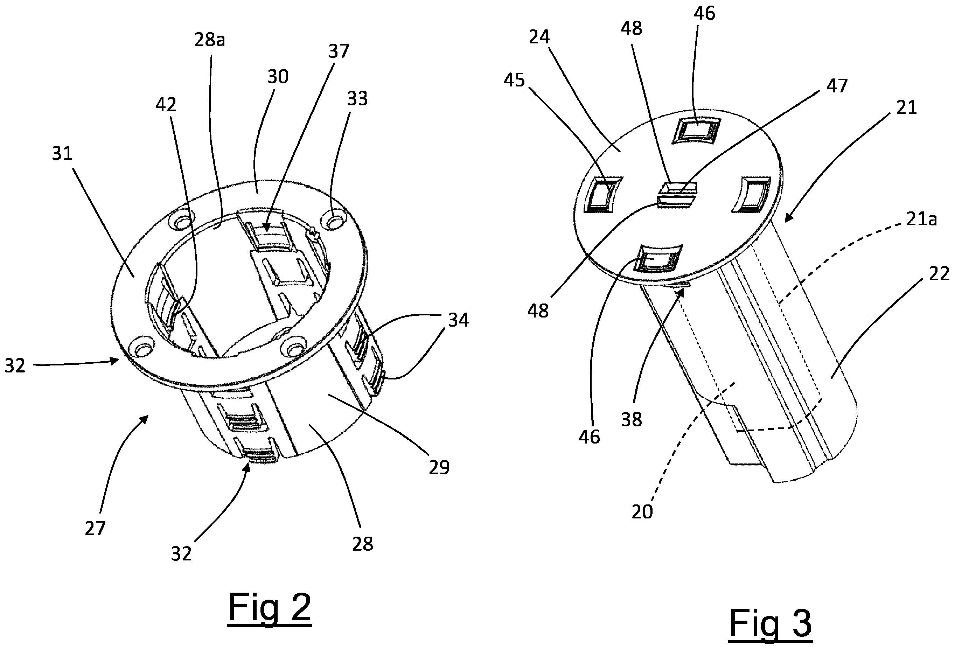

A tracking sensor 20 (illustrated in dotted line in Figure 3) is inserted into a sensor case 21.

The tracking sensor 20 comprises memories or data stores to store characteristic information related to the cable spooled on the cable drum 10, such as the length of the cable, the type of the cable, the diameter of the cable, the numbers of conductors of the cable and any other information that can help in identifying the cable. The data stored in the tracking sensor 20 can be updated when a length of cable is used, so as to update the information on the actual cable wound on the cable drum 10.

The tracking sensor 20 can transmit the stored characteristic information for reception by suitable device. The data transmission and/or update can be performed by directly connecting the tracking sensor to suitable devices or by a wireless connection between the tracking sensor 20 and a suitable receiving device. To this end, the tracking sensor can include a data transceiver to emit and receive signals, such as a Bluetooth, GPRS or any other suitable device or module. The tracking sensor 20 can also include a positioning device or module for transmitting its position, such as a GPS device or module. The tracking sensor 20 is preferably energized by a suitable battery.

The case sensor 21 comprises lateral walls 22 surrounding an internal cavity 21a configured for containing the tracking sensor 20.

In the preferred embodiment of the invention, the lateral walls 22 are preferably curved and defines a substantially cylindrical container for the tracking sensor 20, as illustrated in Figure 3.

In other embodiments, the lateral walls 22 of the sensor case 21 can define a prismatic shape for the sensor case 21.

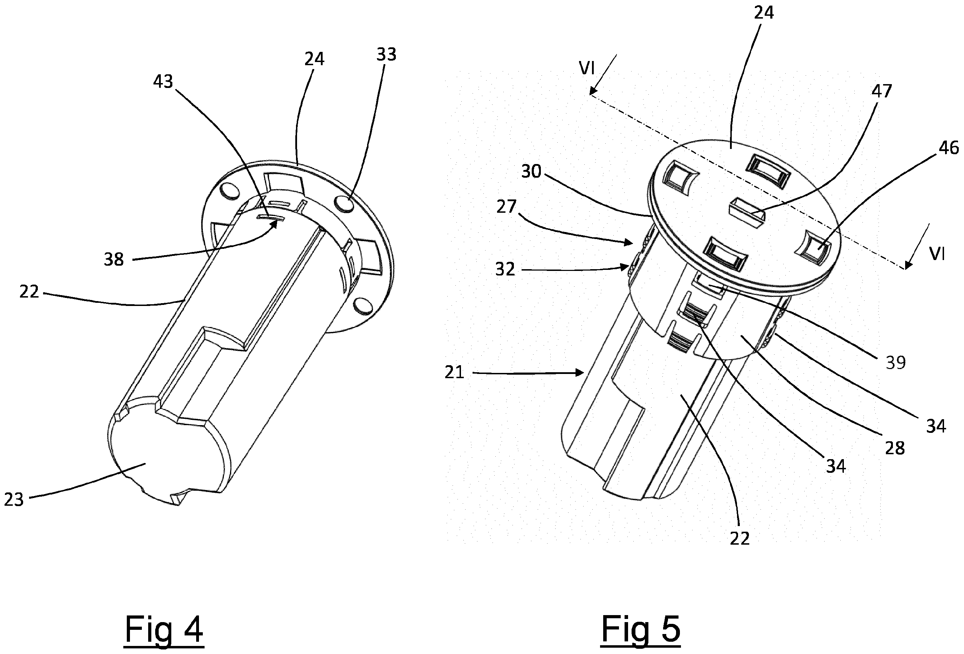

Any case, the sensor case 21 further comprises a base wall 23 (Figure 4) from which the lateral walls 22 extend.

The sensor case 21 comprises a lid 24 for closing the internal cavity 21a. The lid 24 is opposite to the base wall 23 of the sensor case 21. The lid 24 is coupled to the lateral walls 22 of the sensor case 21 and is removable to access the internal cavity 21a and thus the tracking sensor 20.

The coupling between the lid 24 and the lateral walls 22 can be performed by threaded portions provided on the lid 24 and on the lateral walls 22 or by a snap fitting.

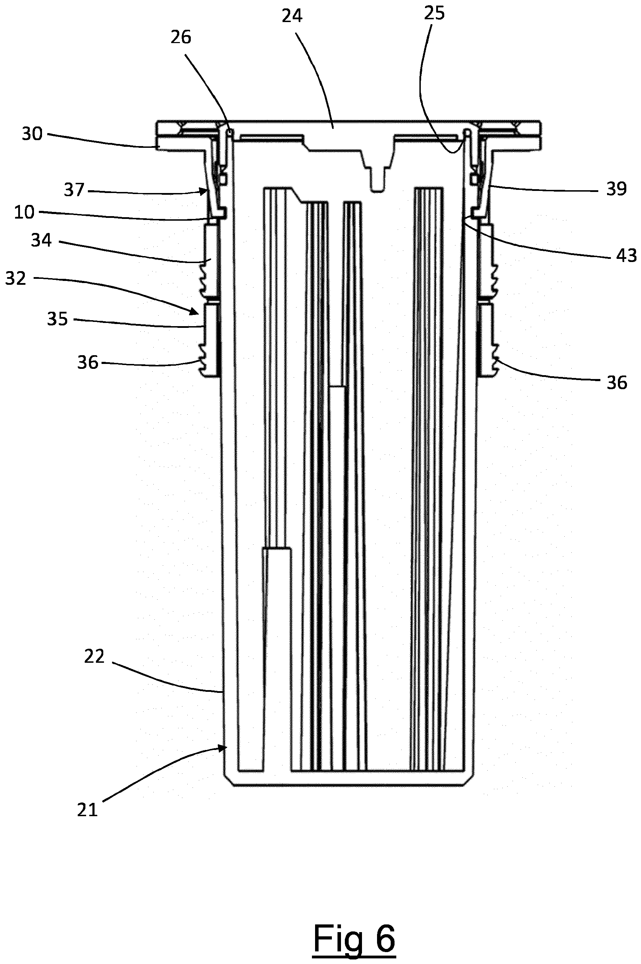

As illustrated in Figure 6, the lid 24 comprises a groove 25 facing the lateral walls 22 of the sensor case 21. A sealing member 26, such as an O-ring, is inserted into the groove 25 and acts between the lid 24 and the lateral walls 22 in order to seal the internal cavity 21a.

A cradle 27 is configured for being coupled to the flange region 12 of the traceable cable drum 10. In particular the cradle 27 is configured for being coupled to the housing 13 provided on the flange region 12.

The cradle 27 comprises a hollow portion 28 surrounded by a peripherical wall 29. The peripherical wall 29 has a substantially cylindrical shape, as illustrated in Figure 2.

The cradle 27 further comprises a flange portion 30 extending from an end portion 28a of the hollow portion 28. The flange portion 30 presents an extension along a transversal direction greater than the extension in the same direction of the hollow portion 28, so as to define a flange. The flange portion 30 and the hollow portion 28 are preferably made as a single piece.

The flange portion 30 comprises an annular top surface 31 substantially flat that lies in a plane substantially perpendicular to the peripherical wall 29 of the hollow potion 28.

The flange portion 30 is configured for abutting on the flange region 12 of the cable drum 10 and the hollow portion 28 is configured for being inserted into the housing 13.

In particular, a surface of the flange portion 30 opposite to the annular top surface 31 is designed for leaning against the flange region 12 of the cable drum 10.

In order to stably coupling the cradle to the housing 13, the cradle 27 comprises anchor members 32.

As illustrated in Figure 2, the anchor members 32 comprise a plurality of holes 33 (four in the embodiment illustrated in Figure 2) provided in the flange portion 30 of the cradle 27.

The holes 33 are configured for being crossed by screws screwed in the flange region 12 of the cable drum 10. The holes 33 are countersunk so as to receive screw heads and allowing the latter to flush with the annular top surface 31 of the flange portion 30.

The anchor members 32 further comprise a plurality of indented flaps 34 provided on the peripherical wall 29 of the hollow portion 28 of the cradle 27, as depicted in Figure 2.

Each indented flap 34 is elastically connected to the peripherical wall 29 so that it can be moved outwardly from the peripherical wall 29. On the external surface 35 of each indented flap 34 there is provided a plurality of wedged ribs 36 (Figure 6) designed for gripping the housing 13.

In the preferred embodiment of the invention, there are provided four stacks of indented flaps 34, each of which angularly spaced apart of about 90° around the peripherical wall 29, as illustrated in Figure 2. Each stack of indented flaps 34 comprises two superposed indented flaps 34.

In other embodiment not shown, the number and position of the indented flaps 34 can be different. Any case, it is preferable providing at least two indented flaps 34 circumferentially opposed on the peripherical wall 29.

Moreover, the anchor members 32 can comprise both the cited holes 33 and indented flaps 34 (as in the preferred embodiment), only holes 33 or only indented flaps 34.

The cradle 27 is configured for receiving the sensor case 21.

In particular, the lateral walls 22 of the sensor case 21 are insertable into the hollow portion 28 of the cradle 27. The lid 24 of the sensor case 21 abuts against the flange portion 30 of the cradle 28 with the annular top surface 31 of the flange portion 30 in contact with the lid 24.

As illustrated in Figure 5, the lid 24 of the sensor case 21 covers the holes 33 in the flange portion 30 of the cradle, so blocking any access to the screws inserted into the holes 33.

As depicted in Figure 6, the portion of the sensor case 21 inserted into the hollow portion 28 of the cradle 27 fits in the hollow portion 28. In particular, the lateral walls 22 of the sensor case 21 contacts the peripheral wall 29 of the hollow portion 28 of the cradle 27.

As illustrated in Figure 6, when the sensor case 21 is inserted in the cradle 27, the lateral walls 22 of the sensor case 21 elastically deform the indented flaps 34 of the cradle 27 by pushing the same against the housing 13 in the flange portion 12 of the cable drum 10, which assists the indented flaps 34 in holding the cradle 27 in position.

The sensor case 21 can be inserted and removed from the cradle 27.

To this end, the hollow portion 28 of the cradle comprises a plurality of engagement elements 37 and the sensor case 21 comprises a plurality of connection elements 38 which cooperate with the engagement elements 37 for holding and releasing the sensor case 21.

In particular, the engagement elements 37 are movable between a retain condition and a release condition.

In the retain condition, the engagement elements 37 are engaged with the connection elements 38 and the sensor case 21 is held into the hollow portion 28 of the cradle 27. In the release condition, the engagement elements 37 are disengaged from the connection elements 38 and the sensor case 21 can be extracted from the hollow portion 28 of the cradle 27.

The engagement elements 37 move between the retain and the release condition by an elastic deformation of the engagement elements 37.

In the preferred embodiment of the invention, the engagement elements 37 comprise a plurality of engagement clips 39 provided in the peripherical wall 29 of the hollow portion 28 of the cradle 27.

Each engagement clip 39 is connected at an end portion 40 to the peripherical wall 29 and presents a free end portion 41 opposed to the first end portion 40. The free end portion 41 is provided with a tooth 42 protruding inwardly toward a centre of the hollow portion 28.

When the engagement clip 39 is in its undeformed condition, the tooth 42 emerges from the peripherical wall 29 toward the centre of the hollow portion 28, as illustrated in Figure 2.

The connection elements 38 comprise a plurality of recesses 43 each of which is designed for being engaged by a relevant engagement clip 39.

The recesses 43 are provided on the lateral walls 22 of the sensor case 21 at position facing the teeth 42 of the engagement clips 39 when the sensor case 21 is inserted in the cradle 27.

The recesses 43 have a closed end so that the recesses 43 do not pass through the lateral walls 22 of the sensor case 21, as illustrated in Figure 6.

In the preferred embodiment of the invention, the engagement clips 39, as well as the recesses 43, are four and are angularly spaced by angles of 90°. The recesses 43 are provided on the lateral walls 22 of the sensor case 21 above the indented flaps 34, as illustrated in Figures 2 and 6.

When the sensor case 21 is inserted in the cradle 27, the teeth 42 of the engagement clips 39 insert into the recesses 43, so realizing the retain condition, and retain the sensor case 21 in the cradle 27, as illustrated in Figure 6.

In order to extract the sensor case 21 from the cradle 27 all the engagement clips 39 need to be moved to reach the release condition. In this respect, all the engagement clips 39 need to be elastically deformed and the elastic deformation of all the engagement clips 39 needs to be maintained.

In particular, the teeth 42 need to be disengaged from the recesses 43 by moving outwardly the engagement clips 39.

To this end, the lid 24 of the sensor case 21 comprises a plurality of slots 45 for accessing the engagement clips 39. The slots 45 are vertically aligned with the engagement clips 39, in order to realize apertures in the lid 24 that allow to reach the engagement clips 39.

The number of slots 45 is identical to the number of engagement clips 39 and the slots 45 are angularly spaced apart each other by about 90°.

The slots 45 present a curved shape, namely they are not rectilinear slits but follow, on the surface of the lid 24, a curved path.

In the preferred embodiment of the invention, each slot 45 is covered by a detachable flap 46 that needs to be removed for accessing to the slot 45.

The detachable flaps 46 have two main function. The first function, that is performed when the detachable flaps 46 are still attached to the lid 24, is to prevent from a direct access to the slots 45 (and thus to the engagement clips 39). The second function, that is performed when the detachable flaps 46 have been removed from the lid 24, is to indicate that the sensor case 21 has been, at least potentially, accessed.

As illustrated in Figures 3 and 5, the lid 24 of the sensor case 21 comprises a recessed rib 47. Beside the recessed rib 47 are provided two opposed grooves 48 which allow the nose of a pliers to grip the recessed rib 47. The two grooves 48 do not pass through the lid 24.

For using the traceable cable drum 10, the cradle 27 is inserted into the housing 13 provided in the flange region 12 of the cable drum.

In particular, the hollow portion 28 of the cradle 27 is inserted into the housing 13 with the flange portion 30 abutting onto a portion of the flange region 12 surrounding the housing 13.

Screws or similar fastening means are inserted into the holes 33 of the flange portion 30 and screwed in the flange region 12 surrounding the housing 13. This allows to hold the cradle in position in the housing 13.

The tracking sensor 20 is inserted into the sensor case 21 (or the sensor case is supplied with the tracking sensor 20 already inserted therein).

Then the sensor case 21 is inserted into the hollow portion 28 of the cradle 27.

As above explained, the sensor case 21 elastically deforms the indented flaps 34 of the cradle 27 by pushing the same against the housing 13, so improving the connection between the cradle 27 and the housing 13.

At the same time, the teeth 42 of the engagement clips 39 enter into the recesses 43 and retain the sensor case to the cradle 27.

In this condition, as above stated, the sensor case 21 is prevented from being extracted from the cradle 27, since the detachable flaps 46 cover the slots 45 for accessing the engagement clips 39. The cradle 27 is prevented from being extracted from the housing 13, since the heads of the screws are covered by the lid 24 of the sensor case 21 and the indented flaps 34 are pushed against the housing 13 by the sensor case 21.

In case an authorised technician needs to operate on the tracking sensor 20 for any reason, the technician removes the detachable flaps 46 from the lid 24, so exposing the slots 45.

The technician is provided with a disengaging tool 49, preferably with two disengaging tools 49, which forms a part of a kit comprising the sensor case 21, the tracking sensor 20 and the cradle 27.

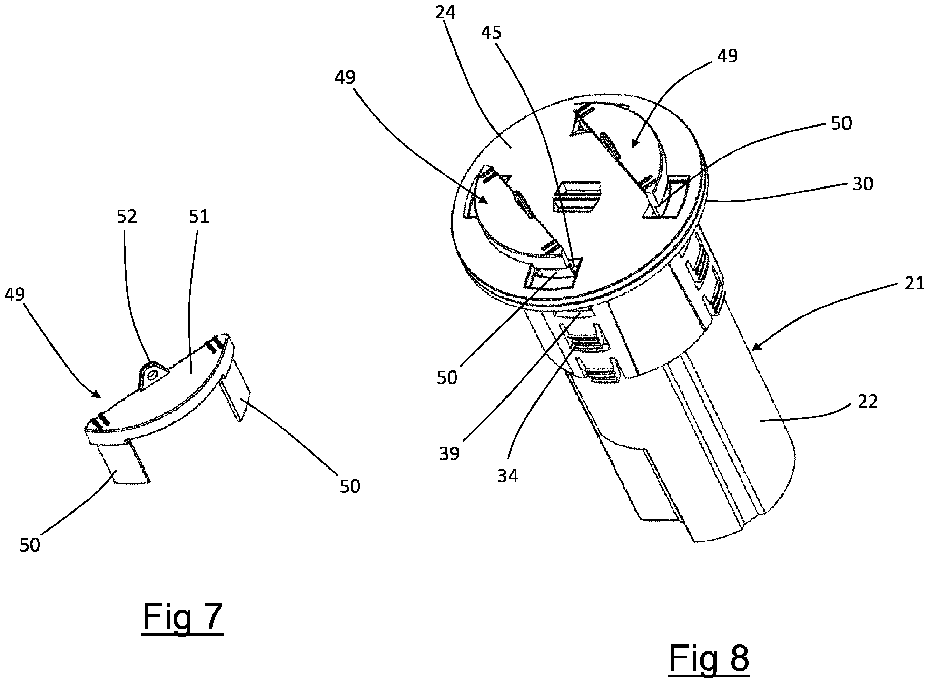

The disengaging tool 49, illustrated in Figure 7, comprises at least one, preferably two, pin 50 having the same shape of the slots 45 in the lid 24. Each pin 50 has a length that is equal to or slightly less than the distance between the top surface of the lid 24 and the tooth 42 of the engagement clip 39 (such a distance being measured when the sensor case 21 is inserted and held in the cradle 27).

In case the disengaging tool 49 comprises more than one pin 50, as in the preferred embodiment, the disengaging tool comprises a connecting portion 51 that connects the pins 50 and that separates the pins 50 by the same distance that separates the slots 45. The connecting portion can comprises an eyelet 52 for allowing the disengaging tool 49 to be coupled to a key chain.

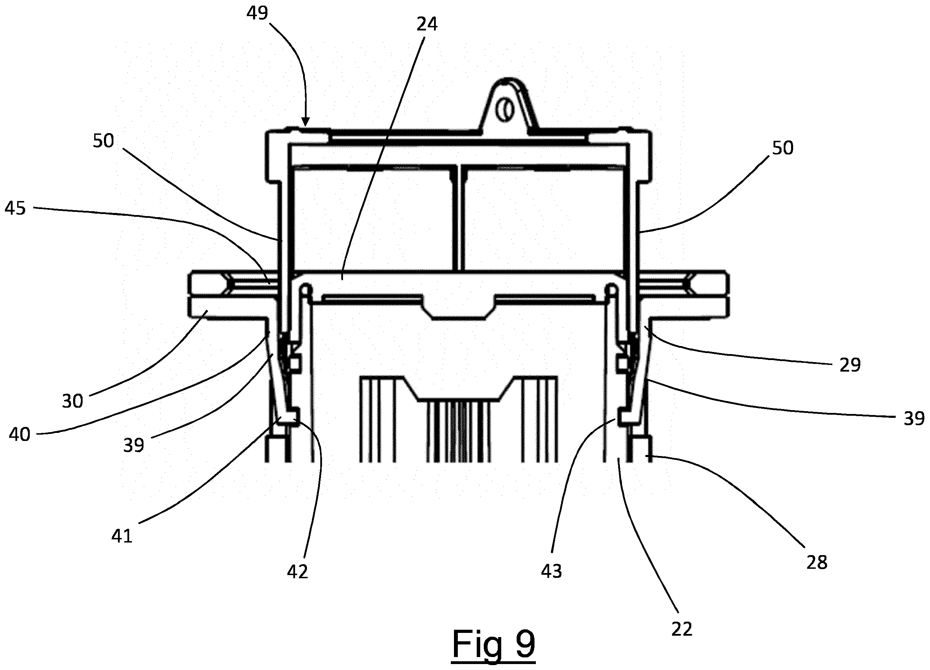

The technician inserts the disengaging tools 49 into the slots 45 in the lid 24 and pushes the disengaging tools 49 into the slots 45 so that the pins 50 contact the engagement clips 39, as schematically illustrated in Figure 9.

By continuing pushing the disengaging tool 49, the pins 50 apply a pressure on the engagement clips 39 that elastically deforms the latter and disengages the teeth 42 from the recesses 43.

By leaving the disengagement tools in position, the engagement clips 39 are all elastically deformed and they reach the release condition.

The sensor case 21 is thus no longer constrained to the cradle 27 and can be extracted from the latter.

By gripping the recessed rib 47 with a pliers, the technician can extract the sensor case 21 and can access the tracking sensor 20 for its maintenance.

## Claims

1. Traceable cable drum (10) comprising:
a reel region (11) and at least one flange region (12);
a cradle (27) comprising anchor members (32) configured for anchoring said cradle (27) to said flange region (12);
a sensor case (21) containing a tracking sensor (20) and configured for being inserted into said cradle (27);
wherein said cradle (27) comprises a plurality of engagement elements (37) and said sensor case (21) comprises a plurality of connection elements (38), said plurality of engagement elements (37) or said plurality of connection elements (38) being movable between a retain condition, wherein said plurality of engagement elements (37) and said plurality of connection elements (38) cooperate to retain said sensor case (21) in said cradle (27), and a release condition wherein said plurality of engagement elements (37) and said plurality of connection elements (38) are disengaged and the sensor case (21) is extractable from the cradle (27).

2. Traceable cable drum (10) according to claim 1, wherein in said release condition said plurality of engagement elements (37) or said plurality of connection elements (38) are elastically deformed.

3. Traceable cable drum (10) according to claim 1 or 2, wherein said plurality of engagement elements (37) comprise engagement clips (39) and said plurality of connection elements (38) comprise a plurality of recesses (43); in said retain condition each engagement clip (39) being inserted into a corresponding recess (43).

4. Traceable cable drum (10) according to claim 3, wherein each recess (43) of said plurality of recesses is provided in a lateral wall (22) of said sensor case (21) and has a closed end..

5. Traceable cable drum (10) according to claim 3 or 4, wherein said sensor case (21) comprises a plurality of slots (45) for accessing to said plurality of engagement clips (39) and for moving the latter from the retain to the release condition; at least some of said slots (45) being covered by relevant detachable flaps (46).

6. Traceable cable drum (10) according to any of claims from 1 to 5, wherein said cradle (27) comprises a hollow portion (28) and a flange portion (30); said hollow portion (28) being configured for receiving said sensor case (21) and said flange portion (30) being configured for abutting on said flange region (12) of the cable drum.

7. Traceable cable drum (10) according to claim 6, wherein said anchor members (32) comprise holes (33) in said flange portion (30) of the cradle (27) configured for being engaged by screw heads.

8. Traceable cable drum (10) according to any of claims from 1 to 7, wherein said sensor case (21) comprises lateral walls (22) surrounding a cavity (21a) for containing said tracking sensor (20) and a lid (24) for closing said cavity (21a).

9. Traceable cable drum (10) according to claims 7 and 8, wherein said lid (24) abuts on said flange portion (30) of the cradle (27) and covers said holes (33).

10. Traceable cable drum (10) according to claim 6, wherein said anchor members (32) comprise a plurality of indented flaps (34) provided on said hollow portion (28) of the cradle (27); said indented flaps (34) being outward elastically deformed by said sensor case (21) when inserted into said hollow portion (28) of the cradle (27).

11. Traceable cable drum (10) according to claims 4 and 10, wherein said engagement clips (39) are provided on said hollow portion (28) of the cradle (27); each engagement clip (39) being aligned with at least one indented flaps (34) and being placed closer to said flange portion (30) of the cradle (27).

12. Traceable cable drum (10) according to claim 8, wherein said lid (24) comprises a recessed rib (47) configured for being gripped by an extraction tool.

13. Traceable cable drum (10) according to claim 5 and 8, wherein said plurality of slots (45) are provided on said lid (24) and presents an arched shape.

14. Kit for traceable cable drum (10) comprising:
a cradle (27) configured for being anchored to a cable drum and comprising a plurality of engagement clips (39);
a sensor case (21) containing a tracking sensor (20), comprising a plurality of recesses (43) and configured for being inserted into said cradle (27) so that said engagement clips (39) engage said recesses (43);
a disengaging tool (49) configured for contacting said engagement clips (39) and disengaging the latter from the recesses (43).

15. Kit according to claim 14, wherein said sensor case (21) comprises a lid (24) having a plurality of slots (45); said disengaging tool (49) comprising a plurality of pins (50) configured for being inserted into said slots (45) and for contacting said engagement clips (39).
